(19) Europäisches Patentamt
European Patent Office
Office européen des brevets

(11) EP 0 989 174 A1

(12) **EUROPEAN PATENT APPLICATION**

(43) Date of publication:
**29.03.2000 Bulletin 2000/13**

(51) Int. Cl.[7]: **C09J 133/14**, C09J 7/02

(21) Application number: **99118697.4**

(22) Date of filing: **22.09.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **24.09.1998 JP 26885498**

(71) Applicant:
**NITTO DENKO CORPORATION**
**Osaka (JP)**

(72) Inventors:
- **Hosokawa, Kazuhito,**
**Nitto Denko Corporation**
**Ibaraki-shi, Osaka (JP)**
- **Oura, Masahiro,**
**Nitto Denko Corporation**
**Ibaraki-shi, Osaka (JP)**

(74) Representative:
**Grünecker, Kinkeldey,**
**Stockmair & Schwanhäusser**
**Anwaltssozietät**
**Maximilianstrasse 58**
**80538 München (DE)**

# (54) Adhesive composition

(57) An adhesive sheet not tacky at ordinary temperatures, exhibiting strong adhesion and high heat resistance by heating under low pressure for a short period of time, having no problem of adhesive protrusion in heat adhesion, storable at ordinary temperatures and excellent in aging stability, which comprises a base material having provided on one side or both sides thereof a layer or layers of a thermal adhesive composition comprising a non-tacky polymer prepared from monomers composed of 70% to 100% by weight of a (meth)acrylic ester represented by the following general formula (I), a homopolymer of which has a glass transition temperature of -30°C or more, and 0% to 30% by weight of a monoethylenic unsaturated monomer copolymerizable therewith, based on the total amount of the monomers:

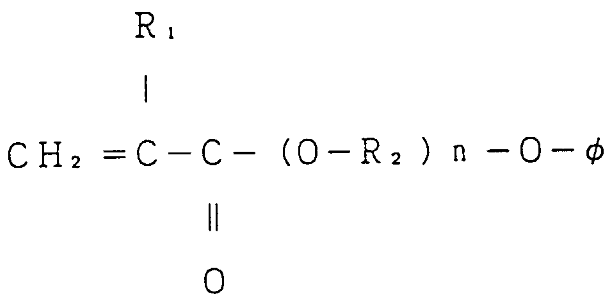

(I)

wherein $R_1$ represents a hydrogen atom or a methyl group; $R_2$ represents a methylene group, an ethylene group or a propylene group; n is an integer of 1 to 3; and $\phi$ represents a phenyl group, a monoalkyl-substituted phenyl group or a dialkyl-substituted phenyl group.

EP 0 989 174 A1

## Description

### FIELD OF THE INVENTION

The present invention relates to a thermal adhesive composition which is not tacky at ordinary temperatures and shows adhesion upon being heated, and an adhesive sheet shaped in sheet or tape form using the same.

### BACKGROUND OF THE INVENTION

Recently, various bonding materials have been used for applications such as fixing of electronic parts. The applications of this kind require not only strong adhesion but also high heat resistance such that the bonding material can withstand solder reflow in mounting an electronic part on a substrate. With miniaturization of electronic equipment, the adhering area has a tendency to become minute. In this case, the control of flowability (protrusion of adhesive) becomes significantly important from the problems of appearance and functional reductions of electronic parts. Further, in the applications of this kind, the adhesion treatment is generally carried out by heat pressing for securing the wettability in adhering, and the adhesion has been desired to be conducted under low pressure for a short period of time for improving the productivity and reducing damage of parts in heat adhering.

The conventional thermosetting adhesive sheets are not tacky at room temperature and exhibit strong adhesion and high heat resistance by heat curing, because the glass transition temperature of adhesives is not less than room temperature. However, the thermosetting adhesives contains unreacted low molecular weight ingredients before curing, so that they have the problem of adhesive protrusion in adhering which is fatal to adhesion to minute portions such as electronic parts, and further have the problem that it takes time to cure them. Furthermore, the adhesive characteristics thereof varies with time because of their reactivity, so that it is difficult to obtain the stable characteristics. For preventing this, storage at low temperatures is required, which raises the problem of troublesome handling.

On the other hand, the conventional adhesive sheets are - 40°C or less in the glass transition temperature of the adhesives, and therefore, tacky at ordinary temperatures. Accordingly, they can be adhered to objects without any previous operations, and can immediately express the adhesive strength by this adhesion. Furthermore, they have the advantages that storage at ordinary temperatures is possible, and that the adhesive characteristics little vary with time, because they contain no unreacted products. However, the adhesive sheets incorporate bubbles therein because of their tackiness in face adhesion by a press. Accordingly, they have the problem that separation and foaming occur at a temperature of 100°C or more by expansion of the bubbles incorporated. They also have the problem that the adhesive strength and the heat resistance are generally inferior to those of the thermosetting adhesive sheets.

### SUMMARY OF THE INVENTION

Contemplating the above-mentioned conventional problems, an object of the present invention is to provide a thermal adhesive composition which is not tacky at ordinary temperatures, does not incorporate bubbles in face adhesion, can exhibit strong adhesion and high heat resistance by heating under low pressure for a short period of time without the problem of adhesive protrusion, can be stored at ordinary temperatures, and is excellent in aging stability.

Another object of the present invention is to provide an adhesive sheet thereof.

In the course of intensive studies for attaining the above-mentioned objects, the present inventors first studied a photopolymerizable composition obtained by adding a monomer capable of increasing the glass transition temperature of a polymer to be prepared to an alkyl (meth)acrylate containing an alkyl moiety having 2 to 14 carbon atoms on average, which is used generally as the main monomer for an acrylic adhesive sheet, in order to obtain a polymer having reduced tackiness. As a result, an adhesive sheet being not tacky at ordinary temperatures could be prepared, but the adhesion treatment took a very long period of time and the sufficient adhesive characteristics could not be exhibited by heating under low pressure for a short period of time. Then, the present inventors studied a photopolymerizable composition prepared by using an alkyl (meth)acrylate having such an alkyl group that the glass transition temperature of the resulting polymer is -30°C or more. The resulting adhesive sheet became very brittle, and those having satisfactory flexibility and softness could not be obtained.

As a result of further studies based on the above-mentioned findings, the present inventors discovered that a non-tacky polymer prepared by using an acrylic monomer having such a specific structure that the glass transition temperature of a homopolymer thereof is -30°C or more as the main monomer in place of the alkyl (meth)acrylate described above, can provide a sheet-like product excellent in flexibility and softness, which does not incorporate bubbles in face adhesion to an adhered because it does not show the tackiness at ordinary temperatures, which can exhibit strong adhesion and high heat resistance by heating under low pressure for a short period of time without the problem of adhesive protrusion, and which can be stored at ordinary temperatures before heat adhesion and were excellent in aging stability, thus completing the present invention.

That is to say, the present invention provides a thermal adhesive composition comprising a non-tacky polymer prepared from monomers composed of 70% to 100% by weight of a (meth)acrylic ester represented by the following general formula (I), a homopolymer of which has a glass transition temperature (hereinafter referred to as "Tg") of -30°C or more, and 0% to 30% by weight of a monoethylenic unsaturated monomer copolymerizable therewith, each based on the total amount of the monomers:

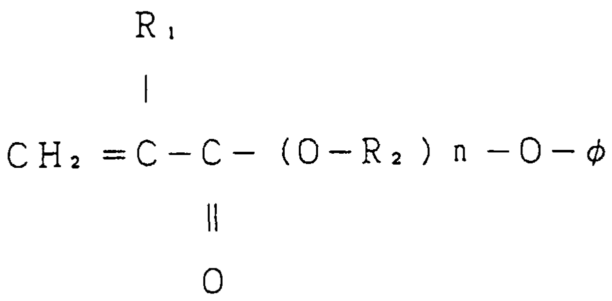

(I)

wherein $R_1$ represents a hydrogen atom or a methyl group; $R_2$ represents a methylene group, an ethylene group or a propylene group; n is an integer of 1 to 3; and ϕ represents a phenyl group, a monoalkyl-substituted phenyl group or a dialkyl-substituted phenyl group.

In particular, the present invention provides the thermal adhesive composition having the above-mentioned structure, wherein the non-tacky polymer is a polymer obtained by irradiation of a radiation such as an ultraviolet ray. Further, the present invention is directed to an adhesive sheet comprising a base material having provided on one side or both sides thereof a layer or layers of the thermal adhesive composition having the above-mentioned constitution.

## DETAILED DESCRIPTION OF THE INVENTION

In general formula (I), when ϕ is a monoalkyl-substituted phenyl group or a dialkyl-substituted phenyl group, the alkyl group as the substituent for the phenyl group generally has from 1 to 5 carbon atoms. When n is 2 or 3, the plural $R_2$ may be the same or different. The (meth)acrylic esters represented by general formula (I), homopolymers of which have a Tg of -30°C or more, and preferably, a Tg of -10°C or more, typically include phenoxyethyl (meth)acrylate, phenoxypropyl (meth)acrylate, nonylphenoxyethyl (meth)acrylate and nonylphenoxypropyl (meth)acrylate. Further, esters of ethylene oxide or propylene oxide addition products (having an addition molar number of 3 or less) of phenol, cresol or nonylphenol and (meth)acrylic acid are also preferably used. These esters may be used alone or as a combination of two or more of them.

The monoethylenic unsaturated monomers copolymerizable with the above-mentioned esters in the present invention are used for improving and modifying the heat resistance and adhesion by introduction of functional groups or polar groups. Examples thereof include acrylic acid, itaconic acid, caprolactone-modified acrylates, sulfopropyl acrylate, hydroxyalkyl acrylates, cyanoalkyl acrylates, acrylamide, substituted acrylamides, N-vinylcaprolactam, acrylonitrile, 2-methoxyethyl acrylate, glycidyl acrylate and vinyl acetate. They may be used either alone or as a combination of two or more, as so desired.

In the present invention, with respect to the amount of the (meth)acrylic ester represented by the above-mentioned general formula (I) and the monoethylenic unsaturated monomer copolymerizable therewith, the former (meth)acrylic ester can be used in an amount of 70% to 100% by weight, preferably 85% to 95% by weight, and the latter copolymerizable monoethylenic unsaturated monomer can be used in an amount of 0% to 30% by weight, preferably 5% to 15% by weight, each based on the total amount of the monomers. The heat resistance and the adhesion can be well balanced by using them in the above amounts.

In the present invention, such monomers are polymerized to form a non-tacky polymer. In the polymerization, appropriate polymerization processes such as solution polymerization, emulsion polymerization and bulk polymerization can be employed. Of these, bulk polymerization which comprises irradiation of radiation such as ultraviolet rays and electron beams is preferred. According to this process, there are no fears of corrosion of electronic parts caused by a residual organic solvent, swelling, separation and displacement due to expansion by vaporization at high temperatures, and contamination, poor adhesion and deteriorated moisture resistance caused by bleeding of emulsifiers. Further, the molecular weight of the polymers can be increased by irradiation of ultraviolet rays having a relatively low intensity, and the non-tacky polymer high in the degree of crosslinking, strong in cohesive force and particularly excellent in heat

resistance can be obtained. In the polymerization, a thermal polymerization initiator or a photopolymerization initiator can be used, and potassium persulfate, ammonium persulfate, hydrogen persulfate or a redox initiator comprising a reducing agent in combination therewith can also be used.

Examples of the thermal polymerization initiator include organic peroxides such as benzoyl peroxide, t-butyl perbenzoate, cumene hydroperoxide, diisopropyl peroxydicarbonate, di-n-propyl peroxydicarbonate, di(2-ethoxyethyl) peroxy-dicarbonate, t-butyl peroxyneodecanoate, t-butyl peroxypivalate, (3,5,5-trimethylhexanoyl) peroxide, dipropionyl peroxide and diacetyl peroxide; and azo compounds such as 2,2'-azobisisobutyronitrile, 2,2'-azobis(2-methylbutyronitrile, 1,1'-azobis(cyclohexane-1-carbonitrile), 2,2'-azobis(2,4-dimethylvaleronitrile), 2,2'-azobis(2,4-dimethyl-4-methoxyvaleronitrile), dimethyl 2,2'-azobis(2-methylpropionate), 4,4'-azobis(4-cyanovaleric acid), 2,2'-azobis(2-hydroxymethylpropionitrile) and 2,2'-azobis[2-(2-imidazoline-2-yl)propane].

The photopolymerization initiators include acetophenone compounds such as 4-(2-hydroxyethoxy)phenyl(2-hydroxy-2-propyl)ketone, α-hydroxy-α,α'-dimethylacetophenone, methoxyacetophenone, 2,2-dimethoxy-2-phenylacetophenone, 2,2-diethoxyacetophenone, 1-hydroxycyclohexyl phenyl ketone and 2-methyl-1-[4-(methylthio)-phenyl]-2-morpholinopropane-1; benzoin ether compounds such as benzoin ethyl ether, benzoin isopropyl ether and anisoin methyl ether; α-ketol compounds such as 2-methyl-2-hydroxypropiophenone; ketal compounds such as benzyl dimethyl ketal; aromatic sulfonyl chloride compounds such as 2-naphthalenesulfonyl chloride; photoactive oxime compounds such as 1-phenone-1,1-propanedione-2-(o-ethoxycarbonyl)oxime; and benzophenone compounds such as benzophenone, benzoylbenzoic acid, 3,3'-dimethyl-4-methoxybenzophenone and 3,3',4,4'-tetra(t-butylperoxy-carbonyl)benzophenone.

The thermal adhesive composition of the present invention comprises the non-tacky polymer described above as an essential ingredient, and can contain various known additives such as viscosity imparting agents (tackifiers), plasticizers, softeners, fillers, pigments, dyes and antioxidants, as optional ingredients. Further, for improving the holding characteristics as adhesives, the thermal adhesive compositions of the present invention desirably contain known crosslinking agents such as isocyanate compounds and epoxy compounds, and when the photopolymerization is carried out, multifunctional (meth)acrylates such as trimethylolpropane (meth)acrylate, pentaerythritol tetra(meth)acrylate, 1,2-ethylene glycol di(meth)acrylate and 1,6-hexanediol di(meth)acrylate can be desirably incorporated.

The amount of the above-mentioned crosslinking agent used is usually from 0.05 part to 5 parts by weight, and preferably, from 0.1 part to 3 parts by weight, per 100 parts by weight of the above-mentioned monomer. When the multifunctional (meth)acrylates are used, di-functional (meth)acrylates can be preferably used in a larger amount within the above-mentioned range, and tri-functional or more functional (meth)acrylates can be preferably used in a smaller amount within the above-mentioned range. If the amount is less than 0.05 part by weight, the degree of crosslinking after polymerization can not be sufficiently increased to result in a tendency to deteriorate the holding characteristics. On the other hand, if it exceeds 3 parts by weight, the resulting adhesive has an extremely high elasticity, which is liable to cause deterioration of the adhesion such as poor adhesion.

The adhesive sheet of the present invention comprises a base material having provided on one side or both sides thereof the thermal adhesive layer or layers containing the above-mentioned non-tacky polymer, and is shaped in sheet or tape form. The above-mentioned layer or layers can be formed by previously obtaining the non-tacky polymer by an appropriate method, adding the crosslinking agent thereto to prepare a thermal adhesive composition, applying the resulting adhesive composition onto the base material, and optionally conducting crosslinking treatment by heating. More preferred is a process of applying onto the base material a radiation-polymerizable composition obtained by adding the multifunctional (meth)acrylate to the monomers or a partially polymerized product thereof before polymerization, irradiating the composition with a radiation such as an ultraviolet ray to polymerize it, and forming a layer simultaneously with the synthesis of the non-tacky polymer. According to this process, better results can be obtained for the heat resistance of the adhesive.

The irradiation of ultraviolet rays is preferably carried out in an oxygen-free atmosphere replaced with an inert gas such as a nitrogen gas, etc., or in a state where the composition is shielded from air by covering with a ultraviolet transmissible film. Ultraviolet rays are electromagnetic radiations having a wavelength range of from about 180 to 460 nm but electromagnetic radiations having wavelengths longer than or shorter than the above wavelength range may be used. As the ultraviolet source, a general ultraviolet irradiation apparatus such as a mercury arc, a carbon arc, a low-pressure mercury lamp, an intermediate-pressure mercury lamp, a high- pressure mercury lamp, a metal halide lamp, etc., is used. The intensity of the ultraviolet rays is properly determined by controlling the distance between the ultraviolet source and a substance to be irradiated or by controlling the voltage in view of the irradiation time (productivity). The irradiation is generally effected such that a rate of polymerization of the composition is 90% or more. The rate of polymerization can be obtained by the following equation: (weight of the resulting polymerized product after heating at 130 °C for 2 hours /weight of the same before heating) × 100 (%) .

As the base material, not only a non-releasing base material such as fiber base materials and synthetic resin films (e.g., polyester films) but also a releasing base material such as a release paper can be used. In the case of the releasing base material, a thermal adhesive layer formed thereon may be finally transferred onto the non-releasing

base material. The adhesive sheet of the present invention includes both the sheets using a non-releasing base material and the sheets using a releasing base material as the base material.

The adhesive sheets of the present invention can be stored at ordinary temperatures, show small changes with time in adhesive characteristics, are not tacky at ordinary temperatures, resulting in no incorporation of bubbles in face adhesion, can exhibit strong adhesion and high heat resistance by heating under low pressure for a short period of time, particularly, can withstand the use thereof at a high temperature of 100°C or more or in a soldering process, and moreover, have no problem of the generation of adhesive protrusion. Accordingly, they can be suitably used as bonding materials for heat-resistant films such as polyimide films and metal plates in use for fixing electronic parts. Further, in addition to these, they can be used in various applications in which the above-mentioned characteristics are utilized.

The present invention will be illustrated in greater detail with reference to the following examples. All parts are understood to be by weight below.

EXAMPLE 1

In a reaction vessel equipped with a condenser tube, a nitrogen introducing tube, a thermometer and a stirrer, 210 parts of ethyl acetate as a solvent, 95 parts of phenoxyethyl acrylate (the Tg of the homopolymer: -10°C), 5 parts of acrylic acid and 0.3 part of benzoyl peroxide were placed, and polymerization was conducted in a stream of nitrogen to obtain a solution of a non-tacky polymer having a solid content of about 30% by weight. With this solution, 3 parts of a multifunctional isocyanate crosslinking agent, per 100 parts of the solid content of the solution, were homogeneously mixed to prepare a solution of a thermal adhesive composition. Then, this solution of the thermal adhesive composition was applied onto a releasing base material, and dried at 130°C for 5 minutes to form a layer of the thermal adhesive composition having a thickness of 80 μm, thereby preparing an adhesive sheet.

EXAMPLE 2

Into a four neck flask, 90 parts of phenoxyethyl acrylate, 10 parts of acryloylmorpholine and 0.05 part of 2,2-dimethoxy-2-phenylacetophenone were charged, and the resulting mixture was exposed to an ultraviolet ray in an atmosphere of nitrogen to partially conduct photopolymerization, thereby obtaining a syrup having a viscosity of about 30 poises. With 100 parts of this partially polymerized syrup, 0.3 part of 1,6-hexanediol diacrylate as a crosslinking agent was homogeneously mixed to prepare a photopolymerizable composition. Then, this photo-polymerizable composition was applied onto a releasing base material, and irradiated with an ultraviolet ray of 900 $mj/cm^2$ to conduct photopolymerization, thereby forming a layer of a thermal adhesive composition having a thickness of 80 μm to prepare an adhesive sheet.

EXAMPLE 3

A photopolymerizable composition was prepared in the same manner as in Example 2 except that 90 parts of an ester (the Tg of the homopolymer: -20°C) of an ethylene oxide addition product of cresol (the added molar number: 1) and acrylic acid was used in place of 90 parts of phenoxyethyl acrylate, and using the same, a layer of a thermal adhesive composition having a thickness of 50 μm was formed to prepare an adhesive sheet in the same manner as in Example 2.

EXAMPLE 4

Into a four neck flask, 95 parts of an ester (the Tg of the homopolymer: -25°C) of an ethylene oxide addition product of nonylphenol (the added molar number: 1) and acrylic acid, 5 parts of acrylic acid and 0.05 part of 2,2-dimethoxy-2-phenylacetophenone were charged, and the resulting mixture was exposed to an ultraviolet ray in an atmosphere of nitrogen to partially conduct photopolymerization, thereby obtaining a syrup having a viscosity of about 30 poises. With 100 parts of this partially polymerized syrup, 0.2 part of trimethylolpropane triacrylate as a crosslinking agent was homogeneously mixed to prepare a photopolymerizable composition. Then, this photopolymerizable composition was applied onto a releasing base material, and irradiated with an ultraviolet ray of 900 $mj/cm^2$ to conduct photopolymerization, thereby forming a layer of a thermal adhesive composition having a thickness of 80 μm to prepare an adhesive sheet.

EXAMPLE 5

Into a four neck flask, 100 parts of phenoxyethyl acrylate and 0.02 part of 2,2-dimethoxy-2-phenylacetophenone were charged, and the resulting mixture was exposed to an ultraviolet ray in an atmosphere of nitrogen to partially

conduct photopolymerization, thereby obtaining a syrup having a viscosity of about 30 poises. With 100 parts of this partially polymerized syrup, 0.3 part of 1,6-hexanediol diacrylate as a crosslinking agent was homogeneously mixed to prepare a photopolymerizable composition. Then, this photopolymerizable composition was applied onto a releasing base material, and irradiated with an ultraviolet ray of 900 mj/$cm^2$ to conduct photopolymerization, thereby forming a layer of a thermal adhesive composition having a thickness of 80 μm to prepare an adhesive sheet.

COMPARATIVE EXAMPLE 1

In a reaction vessel equipped with a condenser tube, a nitrogen introducing tube, a thermometer and a stirrer, 210 parts of ethyl acetate as a solvent, 60 parts of butyl acrylate (the Tg of the homopolymer: < -30°C), 35 parts of acrylonitrile, 5 parts of acrylic acid and 0.3 part of benzoyl peroxide were placed, and polymerization was conducted in a stream of nitrogen to obtain a solution of a polymer having a solid content of about 30% by weight. With this solution, 3 parts of a multifunctional isocyanate crosslinking agent, per 100 parts of the solid content of the solution, was homogeneously mixed to prepare an adhesive solution. Then, this adhesive solution was applied onto a releasing base material, and dried at 130°C for 5 minutes to form an adhesive layer having a thickness of 80 μm, thereby preparing an adhesive sheet.

COMPARATIVE EXAMPLE 2

Into a four neck flask, 80 parts of isooctyl acrylate (the Tg of the homopolymer: < -30°C), 20 parts of acrylic acid and 0.05 part of 2,2-dimethoxy-2-phenylacetophenone were charged, and the resulting mixture was exposed to an ultraviolet ray in an atmosphere of nitrogen to partially conduct photopolymerization, thereby obtaining a syrup having a viscosity of about 30 poises. With 100 parts of this partially polymerized syrup, 0.3 part of 1,6-hexanediol diacrylate as a crosslinking agent were homogeneously mixed to prepare a photopolymerizable composition. Then, this photopolymerizable composition was applied onto a releasing base material, and irradiated with an ultraviolet ray of 900 mj/$cm^2$ to conduct photopolymerization, thereby forming a adhesive layer having a thickness of 80 μm to prepare an adhesive sheet.

COMPARATIVE EXAMPLE 3

Into a four neck flask, 80 parts of ethyl acrylate (the Tg of the homopolymer: > -30°C), 20 parts of acryloylmorpholine and 0.05 part of 2,2-dimethoxy-2-phenylacetophenone were charged, and the resulting mixture was exposed to an ultraviolet ray in an atmosphere of nitrogen to partially conduct photopolymerization, thereby obtaining a syrup having a viscosity of about 30 poises. With 100 parts of this partially polymerized syrup, 0.3 part of 1,6-hexanediol diacrylate as a crosslinking agent was homogeneously mixed to prepare a photopolymerizable composition. Then, this photo-polymerizable composition was applied onto a releasing base material, and irradiated with an ultraviolet ray of 900 mj/$cm^2$ to conduct photopolymerization, thereby forming an adhesive layer having a thickness of 80 μm to prepare an adhesive sheet.

For the respective adhesive sheets of Examples 1 to 5 and Comparative Examples 1 to 3, and a commercial theremosetting adhesive sheet (a sheet comprising a releasing base material having provided thereon a 100-μm thick layer of a thermosetting epoxy/rubber adhesive) as Reference Example 1, the tackiness, the adhesion (90° peel adhesive strength) and the heat resistance (solder heat resistance) were evaluated by the following methods. Results thereof are as shown in Table 1.

Tackiness

The adhesive sheet cut to a width of 10 mm with the releasing base material included was laminated with SUS 304 (stainless steel specified in Japanese Industrial Standard) by a hand roll at ordinary temperatures, and immediately separated. At that time, one well separated without elongation and breakage was evaluated as "non-tacky", and one in which elongation and breakage were developed was evaluated as "tacky".

Adhesion

The adhesive sheet cut to a width of 10 mm and a length of 50 mm was laminated with a polyimide film having a thickness of 75 μm by a laminator (temperature: 100°C, pressure: 5 kg/cm, rate: 2 m/minute), just after preparation (initial) and after storage at 30°C for 30 days (after storage), and then, this laminated product was further laminated with SUS 304 by a press (temperature: 200°C, time: 1 second, pressure: 10 kg/$cm^2$). This sample was cured and aged by heat treatment at 150°C for 1 hour, followed by standing in the atmosphere of 23°C and 65% RH for 30 minutes. Then,

the adhesive sheet was pulled in the direction of 90° at a pulling rate of 50 mm/minute, and its median was taken as the 90° peel adhesive strength.

Heat Resistance

The adhesive sheet cut to a width of 50 mm and a length of 50 mm was laminated with a polyimide film having a thickness of 75 µm by a laminator (temperature: 100°C, pressure: 5 kg/cm, rate: 2 m/minute, and then, this laminated product was further laminated with SUS 304 of a 30 mm square by a press (temperature: 200°C, time: 1 second, pressure: 10 $kg/cm^2$). After this sample was cured and aged by heat treatment at 150°C for 1 hour, immediately (initial) and after further standing in the atmosphere of 30°C and 60% RH for 7 days (after standing), the sample was floated on a solder bath melted at 240°C for 60 seconds with the SUS 304 face being upward. The laminated state of the sheet after the treatment was visually observed. One in which neither foaming of the adhesive nor abnormal adhesion (floating, wrinkles, displacement and separation) was observed was evaluated as "A", and one in which either the above-mentioned foaming or abnormal adhesion was clearly observed was evaluated as "B".

TABLE 1

| | Tackiness | Adhesion After | | Heat Resistance After | |
|---|---|---|---|---|---|
| | | Initial (g/cm) | Storage (g/cm) | Initial | Standing |
| Example 1 | Non-tacky | 3,200 | 3,400 | A | A |
| Example 2 | Non-tacky | 4,000 | 3,800 | A | A |
| Example 3 | Non-tacky | 2,000 | 2,000 | A | A |
| Example 4 | Non-tacky | 2,800 | 3,000 | A | A |
| Example 5 | Non-tacky | 3,000 | 3,000 | A | A |
| Comparative Example 1 | Non-tacky | 20 | 20 | B | B |
| Comparative Example 2 | Non-tacky | 2,000 | 2,000 | A | B |
| Comparative Example 3 | Non-tacky | 10 | 10 | B | B |
| Reference Example 1 | Non-tacky | 3,000 | 40 | B | B |

The results of Table 1 described above apparently reveal that the respective adhesive sheets of Examples 1 to 5 of the present invention are not tacky at ordinary temperatures, so that there is no fear of incorporating bubbles in the face adhesion, that they exhibit strong adhesion and satisfactory solder heat resistance by heating under low pressure for a short period of time, and further, that they show no changes in adhesive strength depending on storage circumstances of the sheets, so that they are excellent in aging stability. The results also indicate that no problem of adhesive protrusion is encountered in the above-mentioned adhesive test.

In contrast, in Comparative Examples 1 to 3, the adhesive sheets not tacky at ordinary temperatures can be prepared by selecting the copolymerization monomers and the main monomers. However, sufficient adhesive strength can not be obtained by the adhesion treatment for a short period of time, and even if good adhesive strength can be obtained as Comparative Example 2, the solder heat resistance can not be satisfied. Further, the adhesive sheet using the commercial thermosetting epoxy adhesive shown in Reference Example 1 is excellent in adhesive strength and heat resistance, but largely varies in characteristics depending on storage circumstances of the sheet, because of its reactivity, resulting in inconvenient handling of the sheet.

As described above, the present invention can provide a thermal adhesive composition or the sheet-like or tape-like adhesive sheet thereof which is not tacky at ordinary temperatures, does not incorporate bubbles in face adhesion to an adherend, can exhibit strong adhesion and high heat resistance by heating under low pressure for a short period of time, particularly, has such excellent heat resistance that it can withstand the use at a high temperature of 100°C or more or in a soldering process, has no problem of adhesive protrusion in heat adhesion, and moreover, can be stored at ordinary temperatures and are excellent in aging stability, by using the non-tacky polymer in which the acrylic monomer having such a specific molecular structure that the glass transition temperature of the homopolymer is -30°C or more is used as the main monomer.

While the invention has been described in detail and with reference to specific embodiments thereof, it will be apparent to one skilled in the art that various changes and modifications can be made therein without departing from the spirit and scope thereof.

## Claims

1. A thermal adhesive composition comprising a non-tacky polymer prepared from monomers composed of (1) 70% to 100% by weight of a (meth)acrylic ester represented by the following general formula (I), a homopolymer of which has a glass transition temperature of -30°C or more, and (2) 0% to 30% by weight of a monoethylenic unsaturated monomer copolymerizable therewith, each based on the total amount of the monomers:

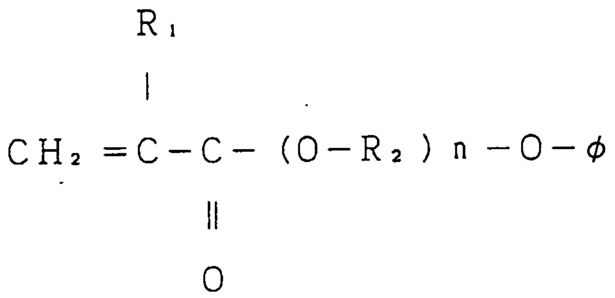

(I)

wherein $R_1$ represents a hydrogen atom or a methyl group; $R_2$ represents a methylene group, an ethylene group or a propylene group; n is an integer of 1 to 3; and $\phi$ represents a phenyl group, a monoalkyl-substituted phenyl group or a dialkyl-substituted phenyl group.

2. The thermal adhesive composition according to claim 1, wherein the non-tacky polymer is a polymer obtained by irradiation of a radiation.

3. The thermal adhesive composition according to claim 1, wherein the radiation is an ultraviolet ray.

4. The thermal adhesive composition according to claim 1, wherein the (meth)acrylic ester is at least one selected from the group consisting of phenoxyethyl (meth)acrylate, phenoxypropyl (meth)acrylate, nonylphenoxyethyl (meth)acrylate, nonylphenoxypropyl (meth)acrylate, esters of (meth)acrylic acid and ethylene oxide or propylene oxide addition product of phenol, cresol or nonylphenol having an addition molar number of 3 or less.

5. The thermal adhesive composition according to claim 1, wherein the monoethylenic unsaturated monomer is at least one selected from the group consisting of acrylic acid, itaconic acid, caprolactone-modified acrylates, sulfopropyl acrylate, hydroxyalkyl acrylates, cyanoalkyl acrylates, acrylamide, substituted acrylamides, N-vinylcaprolactam, acrylonitrile, 2-methoxyethyl acrylate, glycidyl acrylate and vinyl acetate.

6. An adhesive sheet comprising a base material having provided on one side or both sides thereof at least one thermal adhesive composition which comprises a non-tacky polymer prepared from monomers composed of (1) 70% to 100% by weight of a (meth)acrylic ester represented by the following general formula (I), a homopolymer of which has a glass transition temperature of -30°C or more, and (2) 0% to 30% by weight of a monoethylenic unsaturated monomer copolymerizable therewith, each based on the total amount of the monomers:

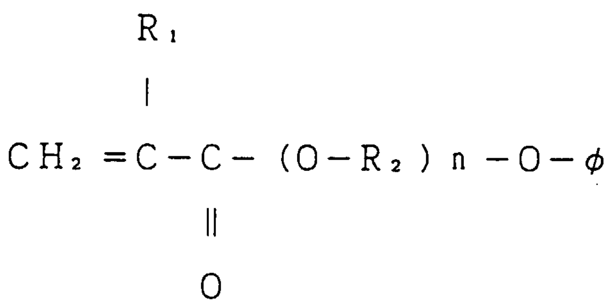

(I)

wherein $R_1$ represents a hydrogen atom or a methyl group; $R_2$ represents a methylene group, an ethylene group or a propylene group; n is an integer of 1 to 3; and $\phi$ represents a phenyl group, a monoalkyl-substituted phenyl group or a dialkyl-substituted phenyl group.

**7.** The adhesive sheet according to claim 6, wherein the non-tacky polymer is a polymer obtained by irradiation of a radiation.

**8.** The adhesive sheet according to claim 7, wherein the radiation is an ultraviolet ray.

**9.** The adhesive sheet according to claim 6, wherein the (meth)acrylic ester is at least one selected from the group consisting of phenoxyethyl (meth)acrylate, phenoxypropyl (meth)acrylate, nonylphenoxyethyl (meth)acrylate, nonylphenoxypropyl (meth)acrylate, esters of (meth)acrylic acid and ethylene oxide or propylene oxide addition products of phenol, cresol or nonylphenol having an addition molar number of 3 or less.

**10.** The adhesive sheet according to claim 6, wherein the monoethylenic unsaturated monomer is at least one selected from the group consisting of acrylic acid, itaconic acid, caprolactone-modified acrylates, sulfopropyl acrylate, hydroxyalkyl acrylates, cyanoalkyl acrylates, acrylamide, substituted acrylamides, N-vinylcaprolactam, acrylonitrile, 2-methoxyethyl acrylate, glycidyl acrylate and vinyl acetate.

European Patent Office

# EUROPEAN SEARCH REPORT

Application Number
EP 99 11 8697

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | JP 05 008348 A (NIPPON SHEET GLASS CO LTD;OTHERS: 01) 19 January 1993 (1993-01-19) * page 24 * --- | 1 | C09J133/14 C09J7/02 |
| X | JP 46 026238 B (NIPPON GEON) 29 July 1971 (1971-07-29) * column 3 * ----- | 1-5 | |

TECHNICAL FIELDS SEARCHED (Int.Cl.7)

C09J
C08F

The present search report has been drawn up for all claims

| Place of search | Date of completion of the search | Examiner |
|---|---|---|
| THE HAGUE | 18 January 2000 | Schueler, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 11 8697

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2000

| Patent document cited in search report | Publication date | Patent family member(s) | Publication date |
|---|---|---|---|
| JP 05008348 A | 19-01-1993 | NONE | |
| JP 46026238 B | | NONE | |

EPO FORM P0459

For more details about this annex : see Official Journal of the European Patent Office, No. 12/82